# NEUE EUROPÄISCHE PATENTSCHRIFT

(11) **EP 1 383 947 B2**
(45) Veröffentlichungstag und Bekanntmachung des Hinweises auf die Entscheidung über den Einspruch: **10.10.2007**
(45) Hinweis auf die Patenterteilung: 22.12.2004
(21) Anmeldenummer: 02735117.0
(22) Anmeldetag: 06.03.2002
(51) Int. Cl.: D01F 6/84, D01F 8/14, C08G 63/692

(54) **BIOAKTIVE FASERPRODUKTE**
BIOACTIVE FIBER PRODUCTS
PRODUITS FIBREUX BIOACTIFS

(30) Priorität: 04.04.2001 DE 10116751
(43) Veröffentlichungstag der Anmeldung: 28.01.2004
(73) Patentinhaber: TREVIRA GMBH, 60528 Frankfurt am Main (DE)
(72) Erfinder: LAST, Hartmut, 86199 Augsburg (DE); BLECH, Bernd, A., 86399 Bobingen (DE); DAHRINGER, Jörg, 86399 Bobingen (DE); SEIBEL, Stefan, 63477 Maintal (DE)
(74) Vertreter: Luderschmidt, Schüler & Partner
(86) Internationale Anmeldenummer: PCT/EP2002/002412
(87) Internationale Veröffentlichungsnummer: WO 2002/081791

(56) Entgegenhaltungen:
- DE-A- 2 346 787
- JP-A- 7 305 279
- PATENT ABSTRACTS OF JAPAN vol. 2000, no. 11, 3. Januar 2001 (2001-01-03) & JP 2000 234219 A (TOYOBO CO LTD), 29. August 2000 (2000-08-29)
- PATENT ABSTRACTS OF JAPAN vol. 2000, no. 13, 5. Februar 2001 (2001-02-05) & JP 2000 290834 A (TOYOBO CO LTD), 17. Oktober 2000 (2000-10-17)
- PATENT ABSTRACTS OF JAPAN vol. 1999, no. 13, 30. November 1999 (1999-11-30) & JP 11 222723 A (TOYOBO CO LTD), 17. August 1999 (1999-08-17)

## Beschreibung

Die Erfindung betrifft die Verwendung von Polyesterfasern zur Herstellung von bioaktiven Faserprodukten wie bioaktive Garne und textile Flächengebilde wie Vliese, Gewebe, Maschenwaren und dergleichen sowie entsprechend konfektionierte Artikel wie Bekleidungs- und Wäschetextilien, Sporttextilien, Heimtextilien und Bettwaren, Hygiene- und Medizintextilien, Automobiltextilien, Lebensmittelverpackungen, technische Textilien für Bau und Filtration, Windeln, Binden, Handtücher und dergleichen sowie spezielle bioaktive Fäden oder Garne wie beispielsweise chirurgische Nähfäden oder Tamponrückholfäden.

Bioaktiv im Rahmen der Erfindung bedeutet, daß die Artikel eine biologisch aktive Funktion entfalten, d. h. z. B. bakterizid, fungizid oder akarizid wirken, kurzum die wirksam sind gegen Bakterien, Milben, Pilze, Viren und ähnliche Kleinlebewesen.

Es ist bereits seit längerem bekannt, bioaktive Faserprodukte herzustellen. So werden z. B. in Amerika's Textiles International Band 25 (1996), Heft 12, Seite 118 Vorhänge für Krankenhausbetten beschrieben, die bioaktiv sind, d. h. eine Antimikrobenwirkung entfalten. Die Vorhänge werden aus Garnen hergestellt, die aufgebaut sind auf Basis eines Fasergemisches; dabei wird einmal eine flammfeste Polyesterfaser eingesetzt zum anderen eine Celluloseacetatfaser, die antimikrobiell ausgerüstet ist mittels eines antimikrobiellen Additivs nämlich dem sogenannten Microban B.

Nachteilig bei diesen bioaktiven Vorhängen ist, daß sie erstens aus einem Fasergemisch hergestellt werden müssen und zum anderen die Celluloseacetatfasem gesondert durch Zusatz eines antimikrobiellen Additivs antimikrobiell ausgerüstet werden müssen.

Darüber hinaus kann nicht ganz vermieden werden, daß das antimikrobielle Mittel beim Waschen mehr oder weniger schnell herausgelöst wird, daß das Mittel auch aus dem Textil migrieren kann und bei empfindlichen Personen Allergien hervorruft.

Die antibakterielle Wirkung läßt im übrigen beim Gebrauch nach.

In der japanischen Anmeldung JP07305279a mit dem Veröffentlichungsdatum 21. November 1995 wird eine Polyesterfaser beschrieben, die über antibakterielle Eigenschaften verfügt und entsprechend eingesetzt werden kann. Um die antibakterielle Wirkung hervorzurufen, wird entsprechend der Lehre dieser japanischen Patentanmeldung dem Polyester ein quaternäres Ammoniumsalz eines Alkylphosphatesters beigemischt.

Der Polyester, der das Additiv enthält, enthält polymerisierte Phosphorverbindungen zwecks Verleihen von flammhemmenden Eigenschaften.

Auch bei Produkten, die die dort beschriebenen Fasern enthalten, kann es zu Allergien kommen, wenn der Zusatz aus der Faser herausmigriert, z. B. sei es beim Tragen des textilen Produkts oder auch beim Waschen.

Obwohl es bereits eine ganze Reihe von textilen bioaktiven Faserprodukten gibt, besteht noch ein Bedürfnis nach verbesserten bioaktiven Faserprodukten.

Aufgabe der Erfindung ist es, bioaktive Faserprodukte zur Verfügung zu stellen, die permanent bioaktiv sind, deren Bioaktivität durch Waschen und Tragen nicht oder nur in geringem Maße reduziert wird, die keine oder erheblich weniger Allergien hervorrufen, die einfach herzustellen sind und über ein breites Bioaktivitätsspektrum verfügen.

Diese Aufgabe wird durch die Verwendung mit den Merkmalen des Anspruches 1 gelöst. Bevorzugte Ausführungsform sind in den Ansprüchen 2 bis 15 beschrieben. Weiterer Gegenstand ist das Faserprodukt gemäß Anspruch 16. Vorzugsweise enthalten die bioaktiven Faserprodukte keine weiteren bioaktiven Komponenten oder Additive. Unter Kettenglied im Sinne der Erfindung sind Kettenglieder zu verstehen, die in der linearen Kette des Polymermoleküls (längste Kette), aber auch in ggf. vorhandenen Seitenketten und Verzweigungen angeordnet sind.

Die bioaktiven Faserprodukte sind vorzugsweise textile Flächengebilde wie Gewebe, Maschenware und Vliese sowie Bekleidungs- und Wäschetextilien, Sporttextilien, Heimtextilien und Bettwaren, Hygiene- und Medizintextilien, Automobiltextilien, Lebensmittelverpackungen, technische Textilien für Bau und Filtration, Windeln, Binden, Handtücher und dergleichen sowie spezielle bioaktive Fäden oder Garne wie beispielsweise chirurgische Nähfäden oder Tamponrückholfäden.

In einer besonders vorteilhaften Ausführungsform sind bioaktive Faserprodukte konfektionierte Fertigprodukte für den Krankenhausbetrieb (Vorhänge und Betten im Krankenzimmer, Bekleidung von Ärzten und Pflegepersonal, OP-Bekleidung, Handtücher, Jacken für Rettungssanitäter, Verbandsmaterial und Abdecktücher, Bezüge für Krankenfahrstühle, chirurgische Nähfäden, Filter für Klimaanlagen etc.), für die Veterinärhygiene (hier auch Seuchenschutz), für Arbeitsbekleidung in der pharmazeutischen und Lebensmittelindustrie (Kittel, Unterwäsche, etc.), für Haushaltsartikel für Küche und Bad (Duschvorhänge, Badematten), für Hygieneartikel wie Windeln, Damenbinden, Erwachsenenwindeln, Unterwäsche für Wöchnerinnen sowie für Sportartikel (Socken, Unterwäsche) und für zahlreiche technische Einsatzgebiete wie z. B, Filter für Klimaanlagen und Automobile. Neben Massenproduktionen wie Wattierungen, Bettfüllungen und Schuhinnenfutter sind darüber hinaus Fertigprodukte aus bioaktiven Fasern auch für sehr anspruchsvolle Einsatzgebiete wie die Raumfahrt geeignet.

Die bioaktiven Fasern, aus welchen die bioaktiven Faserprodukte aufgebaut sind, können als Stapelfaser, Filamente und als Monofile zum Aufbau des bioaktiven Faserprodukts dienen. Dabei ist es möglich, die Faser ganz aus dem Polyester mit den einkondensierten phosphorhaltigen Kettengliedern aufzubauen. Es ist aber auch möglich, sogenannte Mehrkomponentenfasem einzusetzen. Mehrkomponentenfasem vereinen in einer Faser mehrere unterschiedliche Rohstoffe. Dies sind z. B. Bikomponentenfasern, die als Kern/Mantel oder Seitean-Seite-Fasem aufgebaut sind. Dabei kann bei Seite-an-Seite-Fäden ein Teil aus der bioaktiven Polyesterkomponente bestehen, der andere aus einem nicht bioaktiven Material wie beispielsweise einem nicht bioaktiven Polyester.

Bei Kern/Mantelfäden ist , die bioaktive Komponente im Mantel vorzusehen.

Fasern im Sinne der Erfindung können Stapelfasern, Filamente und Monofile sein.

In einer weiteren Ausführungsform der Erfindung kommen die bioaktiven Polyesterfasern als sogenannte Hybridfasern bzw. Hybridgarne zum Einsatz.

Diese Hybridfasern bzw. Hybridgarne bestehen aus mehreren vorzugsweise zwei Polymerkomponenten, wobei eine einen um mindestens 10°C niedrigeren Schmelzpunkt als die andere aufweisen. Es ist möglich, die bioaktive Polyesterkomponente als niedrig schmelzende Komponente oder auch als höher schmelzende Komponente einzusetzen.

Bei diesen Hybridgarnen ist es möglich, durch Einwirkung von höheren Temperaturen die niedriger schmelzende Komponente zum Schmelzen zu bringen, die dann als Matrix für die höher schmelzende Faserkomponente dient oder die durch das Schmelzen oder Anschmelzen für einen besseren Zusammenhalt im textilen Flächengebilde sorgt; beispielsweise die Schiebefestigkeit bei Geweben verbessert oder bei Vliesen den Zusammenhalt der Fasern verbessert.

Sowohl für Mehrkomponenten - als auch für Hybridgarne gilt, daß bei Verwendung der bioaktiven Polyesterkomponente als niedrig schmelzende Komponente die Oberfläche durch Schmelzen oder Anschmelzen in der Regel vergrößert wird, so daß die bioaktive Wirkung verbessert werden kann.

Es werden, Polyester eingesetzt bei denen das mit kondensierte phosphorhaltige Kettenglied sich von folgenden Verbindungen ableitet:

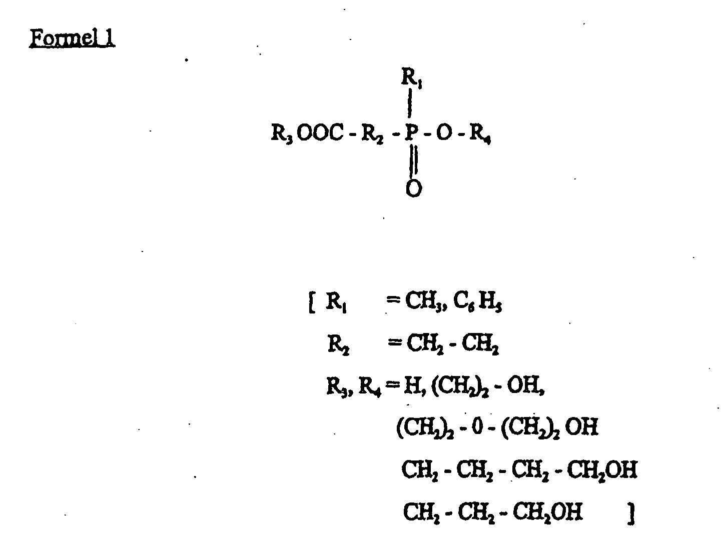

Im Polyester können auch innere Ester der Formel 2 eingesetzt werden.

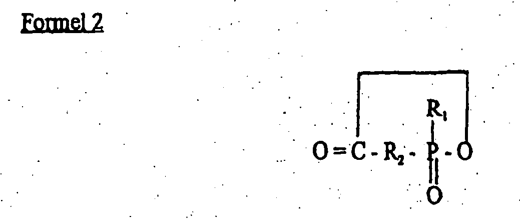

Wobei R₁ und R₂ die bei Formel 1 gegebenen Bedeutungen haben. Wobei beim Einkondensieren selbstverständlich der Ring gespalten wird. Bevorzugt ist R₁ = CH₃.

Die Herstellung entsprechender Polyesterfasern, bei denen der Polyester mitkondensierte phosphorhaltige Kettenglieder aufweist, ist an sich bekannt. Es wird an dieser Stelle auf folgende deutsche Patentanmeldungen bzw. Patentschriften verwiesen:
DE-OS 2 236 037, DE-OS 2 242 002, DE-OS 2 328 00 343, DE-PS 2 346 787, DE-PS 2 454 189.

Die dort beschriebenen Fasern wurden bisher als solche lediglich dort eingesetzt, wo es auf die Flammhemmung ankommt. Sollten bioaktive Faserprodukte hergestellt werden, so wurde stets, wie beispielsweise eingangs angegeben, ein Zusatzmittel eingesetzt, das für die bioaktiven Wirkungen verantwortlich war.

Überraschenderweise wurde gefunden, daß es möglich ist, Faserprodukte mit bioaktiven Wirkungen herzustellen, wenn lediglich als bioaktive Wirkkomponente Fasern aus einem Polyester eingesetzt werden, der mitkondensierte phosphorhaltige Kettenglieder aufweist.

In einer weiteren Ausführungsform der Erfindung enthalten die Polyester, welche mit kondensierte phosphorhaltige Kettenglieder aufweisen, zusätzlich ein bioaktives Additiv zur Erweiterung des bioaktiven Spektrums insbesondere Silberverbindungen, feinverteiltes metallisches Silber oder Additive wie beispielsweise in den EP 116 865, WO 94/154 62 und DE 4 10 6 165 beschrieben oder ein Phosphatglas mit Silberionen. Derartige Additive werden während der Polymerherstellung oder dem aufgeschmolzenen Polymer zugegeben.

In einer vorteilhaften Ausführungsform enthält der Polyester als zusätzliches Additiv Silbermetall. In einer weiteren besonders bevorzugten Ausfühnangsform liegt das elementare Silber in Form von Nanopartikeln vor mit einem Durchmesser von 1 bis 500 Nanometer. Nanopartikel mit einem Durchmesser von 1 bis 100, insbesondere 1 bis 10 Nanometer sind besonders vorteilhaft. Nanopartikel sind im Handel erhältlich.

Weiterer Gegenstand sind Faserprodukte gemäß Anspruch 16.

Faserprodukte aus Mehrkomponentenfasem mit dünnem Mantel sind sehr vorteilhaft. Zum einen lassen sich diese Fasern in einfacher Weise durch Schmelzspinnen herstellen und zwar in guter Qualität. Polyesterfasern, insbesondere Kern/Mantel-Fasern, in denen ausschließlich bioaktive Partikel eingebracht sind und bei denen der Polyester keine mitkondensierten Kettenglieder aufweist, lassen sich beim Schmelzspinnen schlechter verarbeiten. Auch lassen sich die zusätzlichen Effekte, die durch den Zusatz von bioaktiven Additiven erzielt werden sollen, mit einem erheblich geringeren Zusatz erreichen. So kann beispielsweise bei einem Produkt gemäß der Erfindung, bei dem der Polyester als Additiv lediglich 0,5% Silber-Zinkoniumphosphat enthält, die gleiche bioaktive Wirksamkeit erreicht werden wie bei einem Produkt, das 1 % Silber-Zinkoniumphosphat enthält und keine mitkondensierte phosphathaltige Kettenglieder aufweist.

Die Herstellung der Faserprodukte an sich geschieht nach Methoden, die dem Durchschnittsfachmann geläufig sind, d. h. Gewebe und Gewirke werden unter Verwendung üblicher Maschinen hergestellt, Vliese können beispielsweise aus Stapelfasern oder aus Endlosfasem hier z. B. nach dem sogenannten Spunbondverfahren hergestellt werden. Vliese, Gewebe und Maschenwaren gemäß der Erfindung können auch zu Schichtstoffen oder sogenannten Verbundstoffen sowie zu Formteilen verarbeitet werden.

Es war besonders überraschend, daß es gemäß der Erfindung möglich ist, lediglich durch den Einsatz der Polyesterfasern, die aus einem Polyester bestehen, der mitkondensierte phosphorhaltige Kettenglieder aufweist, ein Produkt zu gewinnen, das bioaktive Wirkungen entfaltet. Bisher war man der Ansicht, daß man um eine bioaktive Wirkung zu erhalten dem Polyester weitere Additive zufügen oder andere Substanzen einbauen müßte.

Aufgrund der Erfindung ist es möglich, entsprechende bioaktive Faserprodukte einfach und schnell herzustellen. Die Bioaktivität bei den Produkten ist permanent, sie wird weder durch Waschen, sei es nun mit wässrigen Systemen oder auch durch chemisches Reinigen, bei dem organische Lösungsmittel zum Einsatz gelangen, reduziert. Die einkondensierten Verbindungen können nicht herausmigrieren und führen zu keinem bzw. zu einem erheblich geringeren Allergiepotential als das bei den bisher bekannten Faserprodukten der Fall ist.

Die Erfindung wird anhand von folgendem Beispiel näher erläutert:

PET-Fasern 1,7 dtex 38 mm wurden zu Garnen Nm 50 ringgesponnen und zu einem RL-Gestrick verarbeitet. Muster 1 besteht aus 100 % Normal-PET. Den Fasern in-Muster-2 wurde in der Polymerschmelze 1 % Silber-Zirkoniumphosphat zugegeben. Muster 3 besteht zu 100 % aus Fasern des erfindungsgemäßen Polyesters. Die drei Gestricke wurden unter gleichen Bedingungen gefärbt und reduktiv nachgereinigt.

Die Bioaktivität der Muster wurde nach der japanischen Norm JISL 1902:1998 Testing method for antibacterial of textiles bestimmt. Als Testkeime wurden Staphylococcus aureus ATCC 6538P und Klebsiella pneumoniae DSM 789 verwendet.

Diese Methode bestimmt nach einer Inkubationszeit von 18 h die Differenz S = Mb - Mc mit
- S =: biostatischer Wert
- Mb =: Logarithmus der Zahl aktiver Bakterien auf der unmodifizierten Probe nach einer Inkubationszeit von 18 h
- Mc =: Logarithmus der Zahl aktiver Bakterien auf der modifizierten Probe nach einer Inkubationszeit von 18 h

Als unmodifizierte Probe diente Muster 1 aus 100 % Normal-PET. Gegenüber dem Muster wurden folgende log-Reduktionen S gemessen:

| | Staphylococcus | Klebsiella pneumoniae |
|---|---|---|
| Muster 2 | 2,2 | 7,4 |
| Muster 3 | 2,6 | 7,4 |

D. h. das erfindungsgemäße Muster 3 zeigte in einem Fall die gleiche, im zweiten Fall eine bessere antimikrobielle Wirkung (log-Reduktion) als eine herkömmliche antibakterielle modifizierte PET-Faser.

## Patentansprüche

1. Verwendung von Polyesterfasern , die ausschließlich, weitgehend oder teilweise aus Polyester bestehen, und die als bioaktive Wirkkomponente lediglich Fasern aus einem Polyester der mitkondensierte phosphorhaltige Kettenglieder aufweisen und die mitkondensierten phosphorhaltigen Kettenglieder sich von Verbindungen gemäß der -Formel I und/oder Formel II ableiten, 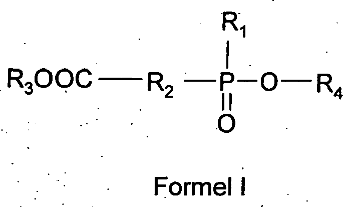 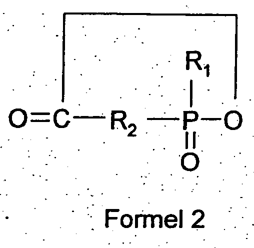 wobei die Reste folgende Bedeutung haben
R1 ist gleich = CH3, C6H5, vorzugsweise CH3,
R2 ist gleich CH2-CH2,
R3, R4 ist gleich H, (CH2)-OH,(CH2)2-O-(CH2)2OH, CH2- CH2- CH2-CH2OH, CH2-CH2-CH2OH
zur Herstellung von bioaktiven Faserprodukten.

2. Verwendung nach Anspruch 1, **dadurch gekennzeichnet, dass**, die Polyesterfasern keine weiteren bioaktiven Komponenten oder Additive enthalten.

3. Verwendung nach Anspruch 1 oder 2, **dadurch gekennzeichnet, dass** die Polyesterfasern als textile flächenförmige Gebilde ausgebildet sind.

4. Verwendung nach Anspruch 3, **dadurch gekennzeichnet, dass** das textile flächenförmige Gebilde ein Gewebe, eine Maschenware, ein Vliese und dergleichen ist.

5. Verwendung nach Anspruch 1 oder 2, **dadurch gekennzeichnet, dass** es sich bei den Faserprodukten um Fäden oder Garne handelt.

6. Verwendung nach Anspruch 5, **dadurch gekennzeichnet, dass** es sich bei den Fäden oder Garnen um chirurgische Nähfäden und dergleichen handelt.

7. Verwendung nach einem der Ansprüche 1 bis 3, **dadurch gekennzeichnet, dass** es sich bei den bioaktiven Faserprodukten um konfektionierte Produkte wie Bekleidungs- und Wäschetextilien, Sporttextilien, Heimtextilien und Bettwaren, Hygiene-und Medizintextilien, Automobiltextilien, Lebensmittelverpackungen, technische Textilien für Bau und Filtration, Windeln Binden, Handtücher und dergleichen handelt.

8. Verwendung nach mindestens einem der Ansprüche 1 bis 7, **dadurch gekennzeichnet, dass** die bioaktive Faser als Mehrkomponentenfaser vorliegt.

9. Verwendung nach Anspruch 8, **dadurch gekennzeichnet, dass** die bioaktive Faser als Bikomponentenfaser vorliegt.

10. Verwendung nach einem der Ansprüche 1 bis 7, **dadurch gekennzeichnet, dass** die bioaktive Fasern als Hybridfasern vorliegen.

11. Verwendung nach Anspruch 1 und einem der Ansprüche 3 bis 8, **dadurch gekennzeichnet, dass** der Polyester zusätzlich bioaktive Additive enthält.

12. Verwendung nach Anspruch 11, **dadurch gekennzeichnet, dass** der Polyester zusätzlich bioaktive silberhaltige Additive enthält.

13. Verwendung nach Anspruch 11, **dadurch gekennzeichnet, dass** der Polyester zusätzlich Silber- und Zirkoniumphosphat enthält.

14. Verwendung nach Anspruch 1 bis 13, **dadurch gekennzeichnet, dass** die Polyesterfasern Mehrkomponenten-Kern/Mantel-Fasern mit einem Polyestermantel sind und der Mantelanteil 15-50% vorzugsweise 15-20% bezogen auf den Flächenquerschnitt der Faser beträgt.

15. Verwendung nach Anspruch 1 und 3 bis 14, **dadurch gekennzeichnet, dass** die Fasern metallisches Silber, vorzugsweise in Form von- Nanopartikeln enthalten.

16. Bioaktive Faserprodukte, welche als bioaktiv wirksame Komponente Mehrkomponenten-Kern/Mantet-Fasern mit einem Polyestermantel aufweisen, bei der als Mantel ausschließlich, weitgehend oder teilweise aus Polyester bestehen, die mitkondensierte phosphorhaltige Kettenglieder aufweisen, und die mitkondensierten phosphorhaltigen Kettenglieder sich von Verbindungen gemäß der Formel I und/oder Formel II ableiten, 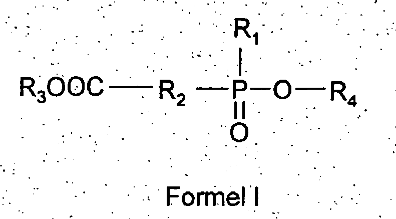 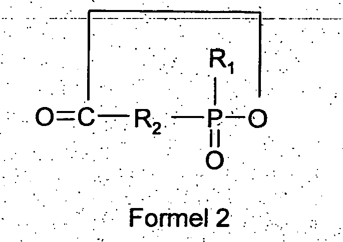 wobei die Reste folgende Bedeutung haben
R₁ ist gleich = CH₃, C₆H₅, vorzugsweise CH₃,
R₂ ist gleich CH₂-CH₂,
R₃, R₄ ist gleich H, (CH₂)₂-OH; (CH₂)₂-O-(CH₂)₂OH, CH₂- CH₂- CH₂- CH₂OH, CH₂-CH₂- CH₂OH
und der Mantelanteil 50% oder weniger bezogen auf den Flächenquerschnitt der Faser beträgt.

## Claims

1. Use of polyester fibers that solely, largely or partially consist of polyester and that solely comprise fibers of a polyester having co-condensed, phosphorus-containing links as bioactive active component, and the co-condensed, phosphorous-containing links are derived from compounds according to formula I and/or formula II, 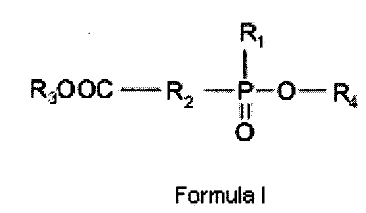 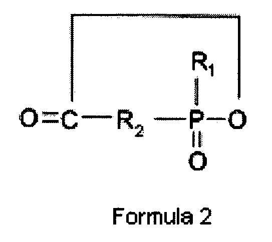 in which the groups have the following meaning
R₁ is equal to = CH₃, C₆H₅, preferably CH₃,
R₂ is equal to CH₂-CH₂,
R₃, R₄ is equal to H, (CH₂)₂-OH, (CH₂)₂-O-(CH₂)₂OH, CH₂- CH₂- CH₂-CH₂OH, CH₂- CH₂- CH₂OH
for the production of bioactive fiber products.

2. The use according to Claim 1, **characterized in that** the polyester fibers do not contain any further bioactive components or additives.

3. The use according to Claim 1 or 2, **characterized in that** the polyester fibers are formed as textile areal structures.

4. The use according to Claim 3, **characterized in that** the textile areal structure is a tissue, a knit fabric, a fleece and the like.

5. The use according to Claim 1 or 2, **characterized in that** the fiber products are threads or yarns.

6. The use according to Claim 5, **characterized in that** the threads or yarns are surgical sewing threads and the like.

7. The use according to one of Claims 1 to 3, **characterized in that** the bioactive fiber products are manufactured products such as clothing textiles and underwear textiles, sport textiles, home textiles and bedding, hygienic textiles and medical textiles, automobile textiles, grocery packagings, technical textiles for construction and filtration, diapers, bandages, handkerchiefs and the like.

8. The use according to at least one of Claims 1 to 7, **characterized in that** the bioactive fiber is present as a multi-component fiber.

9. The use according to Claim 8, **characterized in that** the bioactive fiber is present as a bi-component fiber.

10. The use according to one of Claims 1 to 7, **characterized in that** the bioactive fibers are present as hybrid fibers.

11. The use according to Claim 1 and one of Claims 3 to 8, **characterized in that** the polyester additionally contains bioactive additives.

12. The use according to Claim 11, **characterized in that** the polyester additionally contains bioactive silver-containing additives.

13. The use according to Claim 11, **characterized in that** the polyester additionally contains silver- and zirconium phosphate.

14. The use according to Claims 1 to 13, **characterized in that** the polyester fibers are multi-component core/jacket fibers with a polyester jacket and that the jacket component is 15-50%, preferably 15-20% relative to the cross-sectional area of the fiber.

15. The use according to Claim 1 and 3 to 14, **characterized in that** the fibers contain metallic silver, preferably in the form of nanoparticles.

16. Bioactive fiber products that comprise multi-component core/jacket fibers with a polyester jacket as bioactively active component, in which the jacket consists exclusively, largely or partially of polyesters that comprise co-condensed phosphorus-containing links, and the co-condensed phosphorus-containing links are derived from compounds according to formula I and/or formula 11, 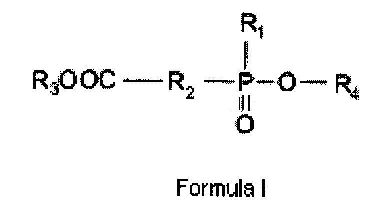 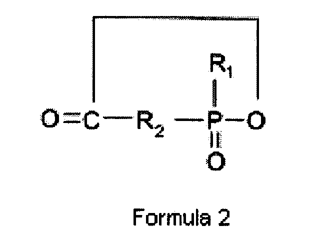 in which the groups have the following meaning
R₁ is equal to = CH₃, C₆H₅, preferably CH₃,
R₂ is equal to CH₂-CH₂,
R₃, R₄ is equal to H, (CH₂)₂-OH, (CH₂)₂-O-(CH₂)₂OH, CH₂- CH₂- CH₂-CH₂OH, CH₂- CH₂- CH₂OH
and the jacket component is 50% or less relative to the cross-sectional area of the fiber.

## Revendications

1. Utilisation de fibres de polyester, constituées exclusivement, en grande partie ou partiellement de polyesters, et qui présentent comme constituants bioactifs seulement des fibres d'un polyester des éléments de chaînes phosphorés cocondensés et les éléments de chaînes phosphorés cocondensées dérivent de composés de formule I et/ou de la formule II, 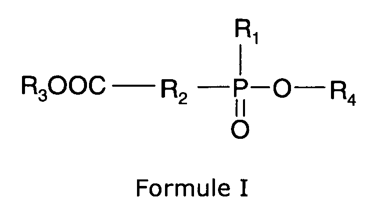 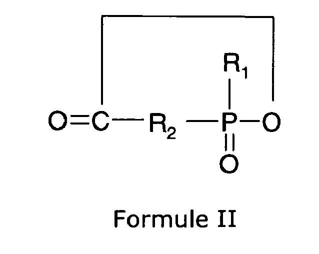 où les restes ont la suivante signification
R₁ = CH₃, C₆H₅, de préférence CH₃,
R₂ = CH₂-CH₂,
R₃, R₄ = H, (CH₂)₂-OH, (CH₂)₂-O-(CH₂)₂OH, CH₂-CH₂-CH₂-CH₂OH, CH₂-CH₂-CH₂OH
pour la production de produits fibreux bioactifs

2. Utilisation selon la revendication 1, **caractérisée en ce que**, les fibres de polyester ne contiennent pas d'autre constituant bioactif ni additif.

3. Utilisation selon la revendication 1 ou 2, **caractérisée en ce que**, les fibres de polyester sont formées d'articles plats textiles.

4. Utilisation selon la revendication 3, **caractérisée en ce que**, l'article plat textile est un tissu, un tissu à mailles, des non-tissés et analogues

5. Utilisation selon la revendication 1 ou 2, **caractérisée en ce que**, les produits fibreux sont des fibres et des fils.

6. Utilisation selon la revendication 5, **caractérisée en ce que**, dans le cas des fibres ou des fils il s'agit des fils de suture chirurgicale et similaires.

7. Utilisation selon l'une des revendications 1 à 3, **caractérisée en ce que**, dans le cas des produits fibreux bioactifs il s'agit de produits confectionnés, comme des textiles d'habillement et de linge, des textiles de sport, des textiles pour la maison et des articles de literie, des textiles d'hygiène et de médicine, des textiles pour l'automobile, des emballages alimentaires, des textiles techniques pour la construction et la filtration, des couches, des bandages, des essuie-mains et analogues.

8. Utilisation selon au moins l'une des revendications 1 à 7, **caractérisée en ce que**, la fibre bioactive se présente sous forme d'une fibre à plusieurs constituants.

9. Utilisation selon la revendication 8, **caractérisée en ce que**, la fibre bioactive se présente sous forme d'une fibre à deux constituants.

10. Utilisation selon l'une des revendications 1 à 7, **caractérisée en ce que**, les fibres bioactives se présentent sous forme de fibres hybrides.

11. Utilisation selon la revendication 1 et l'une des revendications 3 à 8, **caractérisée en ce que**, le polyester contient en outre des additifs bioactifs.

12. Utilisation selon la revendication 11, **caractérisée en ce que**, le polyester contient en outre des additifs bioactifs contenant de l'argent.

13. Utilisation selon la revendication 11, **caractérisée en ce que**, le polyester contient en outre du phosphate d'argent et de zirconium.

14. Utilisation selon la revendication 1 à 13, **caractérisée en ce que**, les fibres de polyester sont des fibres à plusieurs constituants de type âme et enveloppe avec une enveloppe de polyester et la fraction d'enveloppe représente 15-50%, de préférence 15-20%, de la surface de la section transversale de la fibre.

15. Utilisation selon la revendication 1 et 3 à 14, **caractérisée en ce que**, les fibres contiennent de l'argent métallique, de préférence sous forme de nanoparticules.

16. Produits fibreux bioactifs, contenant comme constituants bioactifs des fibres à plusieurs constituants de type âme et enveloppe avec une enveloppe de polyester, où l'enveloppe se compose exclusivement, en grande partie ou partiellement de polyesters, qui présente des éléments de chaînes phosphorés cocondensés et les éléments de chaînes phosphorés cocondensées dérivent de composés de formule I et/ou de formule II, 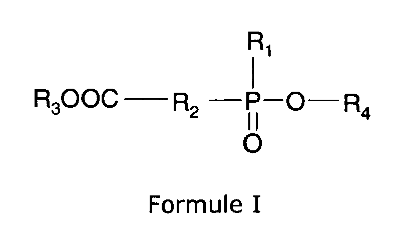 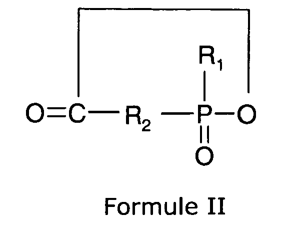 où les restes ont la suivante signification
R₁ = CH₃, C₆H₅, de préférence CH₃,
R₂ = CH₂-CH₂,
R₃, R₄ = H, (CH₂)₂-OH, (CH₂)₂-O-(CH₂)₂OH, CH₂-CH₂-CH₂-CH₂OH, CH₂-CH₂-CH₂OH
et la fraction de l'enveloppe est de 50% ou moins de la surface de la section transversale de la fibre.
